# FASCICULE DE BREVET EUROPEEN

(11) **EP 0 820 158 B1**
(45) Date de publication et mention de la délivrance du brevet: **27.06.2007**
(21) Numéro de dépôt: 97401643.8
(22) Date de dépôt: 09.07.1997
(51) Int. Cl.: H04B 3/54

(54) **Véhicule porteur avec des équipements destinés à communiquer entre eux**
Trägerfahrzeug mit Einrichtungen zur gegenseitigen Kommunikation
Carrier vehicle with equipment for mutual communication

(30) Priorité: 17.07.1996 FR 9608937
(43) Date de publication de la demande: 21.01.1998
(73) Titulaire: SAGEM Défense Sécurité, 75015 Paris (FR)
(72) Inventeur: Staebler, Patrick, 75512 Paris Cedex 15 (FR); Jaeger, Christian, 75512 Paris Cedex 15 (FR)
(74) Mandataire: Bloch, Gérard

(56) Documents cités:
- EP-A- 0 463 341
- EP-A- 0 578 316
- WO-A-93/01660
- WO-A-94/18803
- GB-A- 2 106 357

## Description

Le domaine de l'invention est l'établissement des liaisons de données entre des équipements embarqués sur un avion d'armes. En particulier, il s'agissait d'établir une liaison de données entre la centrale inertielle de l'avion et celle d'un missile ou d'une bombe guidée, par exemple accroché sous une aile, non prévu à l'origine pour équiper l'avion considéré.

Une telle liaison de données sert en particulier, juste avant le lancement, à caler les deux systèmes de navigation de l'avion et du missile.

Pour établir la liaison de données requise par le missile non prévu, on tentait d'insérer le nouveau flux de données correspondant entre les flux de données sur les câblages existants et en particulier sur le bus de transmission qui équipe tout avion. La capacité limitée du bus interdisait souvent une telle solution. En outre, le bus n'offrait pas toujours les performances de transmission requises par le nouveau missile, et une modification de celles-ci, lorsque cela était possible, se révélait coûteuse.

On connaît, par GB 2 106 357, un dispositif capable de transmettre par radio des données de télévision à un véhicule en mouvement à partir d'une infrastructure au sol prévue le long de son parcours et une ligne de couplage quart d'onde. Une telle solution nécessite de prévoir des câblages spéciaux.

La solution consistant à prévoir dans l'avion un câblage supplémentaire spécifique au missile, bien que plus sûre, était un peu équivalente.

Une telle solution était très préjudiciable, puisqu'elle accroissait la masse de l'avion, qu'elle était difficile à mettre en oeuvre compte tenu de la place restreinte et présentait un coût prohibitif.

La demanderesse a donc cherché une solution satisfaisante pour pallier ces défauts.

A cet effet, l'invention concerne un véhicule selon la revendication 1.

Par véhicule porteur, il faut naturellement entendre tout type de véhicule porteur et pas seulement un avion.

Ainsi, c'est la structure du véhicule porteur qui permet la transmission dans l'environnement de celui-ci, intérieur comme extérieur. La livraison peut donc être établie à l'intérieur du véhicule porteur, à l'extérieur ou encore à travers l'enveloppe de celui-ci. De ce fait, les deux équipements peuvent, de façon autonome, communiquer entre eux.

On remarquera que l'invention va à l'encontre de ce qui paraîtrait une approche rationnelle des problèmes de transmission, puisqu'elle consiste à « polluer », par les signaux de données, l'environnement du véhicule porteur.

Cependant, de préférence on reste à l'intérieur d'un gabarit de norme de bruit admis par les éventuels appareils sensibles à cet environnement, c'est-à-dire qu'on peut utiliser en fait ce gabarit de bruit comme canal de transmission.

Selon une première forme de réalisation, la transmission s'effectue par voie radio.

Les deux équipements ne nécessitent donc aucun raccordement et, une fois installés, constituent un système opérationnel.

Selon une deuxième forme de réalisation, la transmission s'effectue le long de la structure du véhicule porteur, et, de préférence, à travers un conducteur électrique, de préférence encore un câble d'alimentation.

Un câble d'alimentation présente l'intérêt de constituer un bus courant dans tout le véhicule.

Le câble, couplé par connexion directe ou par influence, peut appartenir à des appareils externes au système ou encore être un câble commun d'alimentation, comme le câble 28 volts continus. On utilise ainsi le câble, réservé à d'autres usages, pour diffuser les données émises sur celui-ci, jusqu'à atteindre leur destinataire, par éventuellement d'autres câbles couplés à celui-ci.

L'invention sera mieux comprise à l'aide de la description suivante d'une forme de réalisation préférée du système de l'invention, en référence au dessin annexé, sur lequel:

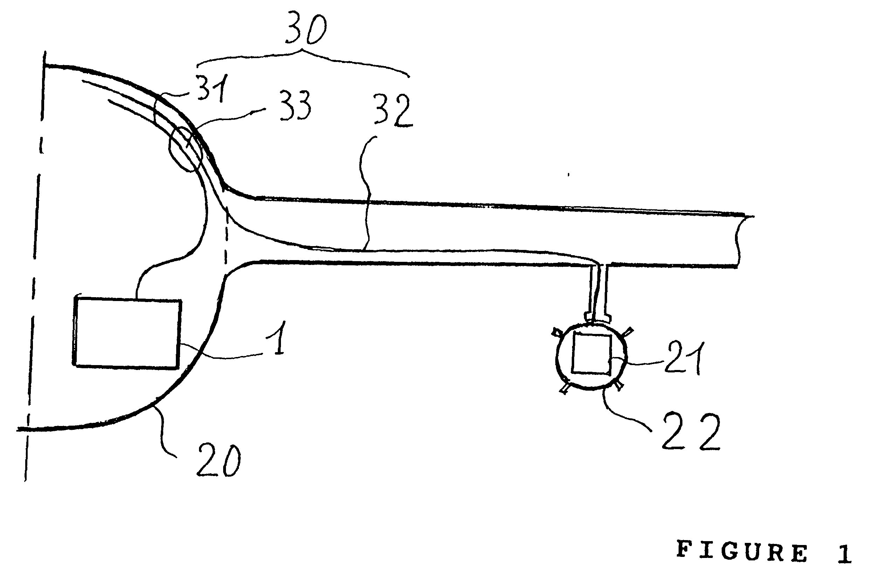

- la figure 1 est une coupe fragmentaire représentant schématiquement de face un avion porteur avec un équipement émetteur/récepteur comportant une centrale inertielle de l'avion relié, par une liaison filaire appartenant à la structure de l'avion, à un équipement semblable intégré dans un missile porté par une aile de l'avion; et

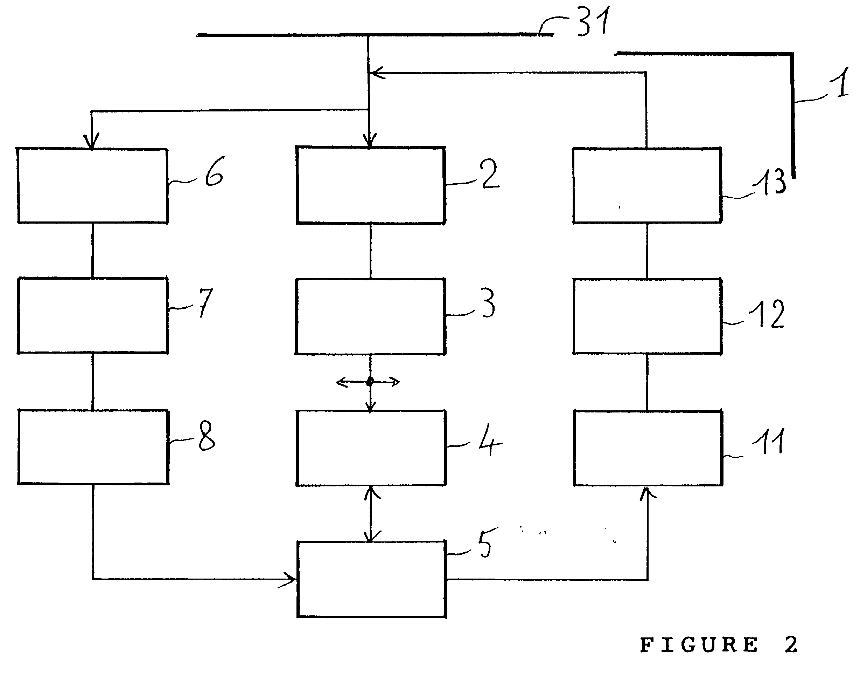

- la figure 2 est un schéma par blocs de l'équipement de l'avion.

L'avion, référencé 20, porte des équipements 1 et 21 de son environnement reliés par une liaison filaire 30, constituée ici de deux câbles conducteurs électriques séparés 31 et 32 d'alimentation en énergie électrique 28V continus des équipements respectifs 1 et 21, câbles qui se longent sur une certaine longueur et présentent de ce fait un couplage ou influence mutuelle électro-magnétique dans la zone repérée 33.

Dans cet exemple, ce sont des centrales inertielles intelligentes respectives de l'avion porteur 20 et d'un missile 22 qu'il porte qui sont associées, et même ici intégrées, aux équipements de transmission de données respectifs 1 et 21.

Les équipements 1 et 21 présentent des structures identiques et, de ce fait, seul l'équipement 1 va être décrit en détail.

La centrale inertielle 4 de l'équipement 1 est alimentée à partir du câble 31 à travers un filtre passe-bas 2 disposé en tête d'un circuit 3 d'alimentation de l'équipement 1.

Une unité centrale, CPU, 5 gère l'équipement 1 et est reliée, par des liaisons non représentées, à ses divers constituants.

Une chaîne 6, 7, 8 de réception de données relie le câble 31 à l'unité centrale 5, dont une sortie est en retour reliée au câble 31 par une chaîne 11, 12, 13 d'émission de données.

La chaîne de réception comporte, dans le sens de propagation des informations, un filtre passe-bande multivoies 6, ou banc de filtres à k voies, un démodulateur 7 pour les k voies et un extracteur de données sur les k voies. Un microprocesseur de traitement du signal peut être utilisé comme banc de filtres 6 pour effectuer un filtrage numérique.

La chaîne d'émission comporte une mémoire 11 de données, adressée par la sortie du CPU 5 et fournissant celles-ci à un gestionnaire 12 de protocole de transmission commandant un modulateur 13 couplé au câble 31. Le modulateur 13 comporte un émetteur ayant une multitude k de porteuses modulées par des signaux de service ou les données à émettre. De préférence, des porteuses sont à des fréquences anharmoniques des fréquences des bruits radio-électriques (alimentations à découpage, écrans vidéo) existant à bord de l'avion.

Le filtre passe-bas 2 est conçu pour bloquer les hautes fréquences (les porteuses) en présentant une impédance d'entrée élevée, donc sans court-circuiter en entrée le signal alternatif appliqué au câble 31 et qui est reçu par le filtre 6.

Le modulateur 13 est ici couplé en alternatif au câble 31 par un transformateur permettant d'y injecter un courant déterminé, compatible avec les exigences des normes de bruit sur le câble 31, ici moins de 1 mA qui se propage à travers les câbles 31, 32 appartenant à la structure de l'avion 20, tout au long de ceux-ci. Un couplage capacitif aurait pu être utilisé. Dans un autre exemple, il aurait pu s'agir de câbles étrangers au système de l'invention, transmettant une alimentation ou des signaux, et passant à proximité des équipements 1, 21.

Le concept de l'invention est de coupler les émetteurs et récepteurs des équipements à un médium apte à propager les signaux émis, éventuellement par couplage d'un médium à un autre, afin de transmettre les données par la structure de l'avion porteur 20. La structure d'un véhicule porteur ou même un local présente en particulier de nombreux câbles aptes à être utilisés à cette fin. En d'autres termes, un émetteur est associé à un volume d'émission, fonction du ou des médiums de son voisinage avec lesquels il peut réaliser un couplage, et un récepteur a de même un volume de réception. Il suffit que ces deux volumes présentent une partie commune contenant les deux équipements pour que ceux-ci puissent communiquer.

Ces volumes peuvent varier avec la fréquence de la porteuse, c'est-à-dire que l'établissement d'une liaison à une fréquence déterminée ne garantit pas qu'une liaison en sens opposé fonctionnera avec certitude dans l'autre sens; il faut donc alors le vérifier.

Le fonctionnement du système va maintenant être expliqué en détails.

Il s'agit de transférer des informations, ici des données numériques, issues de la centrale 4 de l'avion 20 à la centrale du missile 22. Le CPU 5 reçoit cycliquement des données de position et d'orientation issues de la centrale 4 et les range dans la mémoire 11. Juste avant le lancement du missile 22, le pilote commande, par un bouton non représenté, l'envoi des données ci-dessus à l'équipement 21 du missile 22. Le gestionnaire de protocole 12 assure la gestion des échanges sur la liaison 30 qui peut être considérée comme un bus, à accès aléatoire dans cet exemple, accessible par au moins deux tels équipements.

Le protocole comporte les étapes suivantes :
- on émet, depuis l'équipement appelant (12), un message de données prédéterminé de synchronisation sur chacune des porteuses de la pluralité de porteuses aller (13),
- dans l'équipement appelé 21, on détecte les porteuses et on y recherche le message, pour, en pareil cas, émettre en retour un acquis de réception sur chacune des porteuses d'une pluralité de porteuses retour,
- dans l'équipement appelant, on détecte (6-8, 5) l'acquis pour alors émettre les données à transmettre (12), et
- dans l'équipement appelé 21, on détecte (6-8, 5), comme données à recevoir, les données portées par les porteuses aller reçues après l'émission de l'acquis.

Dans cet exemple, on a choisi d'émettre des pluralités de porteuses afin d'accroître la probabilité d'obtenir une transmission correcte, vérifiée par un mot de code de détection d'erreur, CRC, puisqu'on dispose d'une pluralité de couples de volumes d'émission et volumes de réception. Il est donc ici inutile de régler une porteuse qui serait unique.

Le message de données de synchronisation est ici émis simultanément sur les diverses porteuses, mais des émissions successives sur celles-ci ne sont pas à exclure dans d'autres exemples.

La réception des données par l'équipement 21 sera en fait expliquée en référence à la chaîne de réception 6 à 8 de l'équipement 1, qui est la seule représentée.

Le filtre ou banc de filtres 6 sélectionne les seules porteuses k prévues et les applique au démodulateur 7. Dans cet exemple, on a choisi, pour le modulateur 13, une modulation d'angle de phase, c'est-à-dire une modulation de phase proprement dite ou une modulation de fréquence, qui a pour effet de moduler aussi l'angle de phase, plutôt qu'une modulation d'amplitude, plus sensible au bruit. Or, comme expliqué précédemment, les volumes d'émission et de réception sont susceptibles de mal coïncider pour certaines fréquences, ce qui ne permet que la réception d'un signal faible, en limite de détection. En outre, comme le signal transmis au moyen des câbles 31, 32 représente en fait un bruit vis-à-vis du "signal" continu d'alimentation 28 volts, le niveau du signal émis, parasite ou fantôme, a volontairement été limité pour respecter les normes en vigueur, c'est-à-dire le gabarit amplitude/fréquence à ne pas dépasser.

Le démodulateur 7 convertit la valeur de modulation d'angle détectée en une valeur d'amplitude de tension et le signal analogique ainsi obtenu est transformé par le circuit extracteur 8 en une valeur logique 0 ou 1 selon qu'il dépasse ou non un seuil prédéterminé. Le CPU 5 assure la reconnaissance des messages de données ainsi reçus et identifie ainsi la ou les porteuses offrant un sous-canal (une porteuse) de transmission opérationnel, pour les échanges ultérieurs.

Les données de la mémoire 11 sont ainsi émises après vérification, par réception de l'acquis du message, ou de l'acquis d'un en-tête, de synchronisation, qu'il existe au moins un sous-canal utilisable. Il aurait cependant pu être prévu une émission d'emblée des données, selon un format ou trame déterminé, de synchronisation, permettant à l'équipement 21 de reconnaître une telle émission et d'envoyer un acquis de réception des données.

On remarquera que les porteuses respectives émises par les équipements 1 et 21 peuvent être identiques, avec de préférence un fonctionnement à l'alternat, ou être différentes. En outre, il peut être prévu plus de deux émetteurs/récepteurs, avec des adresses d'aiguillage ou validation des informations émises. Dans le cas de porteuses particulières à chaque équipement, un fonctionnement full-duplex ne pose pas de difficulté et permet en particulier de valider « au vol » un en-tête de synchronisation précédant les données (11). Dans d'autres applications, n'exigeant pas le niveau de fiabilité requis dans cet exemple, une transmission monodirectionnelle peut suffire.

Afin de mieux distinguer, en réception, le signal du bruit, il peut être prévu de regrouper un nombre déterminé de porteuses reçues avant d'y rechercher les informations. Ici, cela consiste par exemple à constituer des sous-groupes, disjoints ou non, de plusieurs porteuses démodulées, de fréquences de préférence voisines donc à qualités de transmission sensiblement homogènes entre elles. Pour cela, on additionne les signaux analogiques correspondants issus du démodulateur 7. Une telle intégration masque des défauts passagers qui apparaîtraient successivement sur les diverses porteuses élémentaires et qui, sinon, seraient susceptibles d'entacher chaque liaison élémentaire correspondante d'un taux d'erreur excessif empêchant toute correction par un codage auto-correcteur.

En outre, chaque porteuse peut ainsi être fixée à une amplitude suffisamment faible pour que le gabarit indiqué ci-dessus soit respecté.

Le système de l'invention peut être installé à bord de tout véhicule ou même dans un local, dans la mesure où l'environnement de ceux-ci permet l'établissement des liaisons.

Dans le cas de la radio, les fréquences sont choisies pour permettre l'établissement de liaisons par la structure de l'avion et en particulier à travers la cellule de l'avion.

Si la centrale 4 comporte un récepteur GPS (Système de Positionnement Global), on adapte son antenne pour qu'elle fonctionne aussi sur la ou les fréquences de la liaison, en émission, (donc qu'elle soit bi-directionnelle), et/ou réception. On conçoit cependant que la centrale inertielle 4 de l'exemple détaillé précédent peut contenir un récepteur GPS, retransmettant, par la liaison filaire 30, ses informations à la centrale du missile, équipée ou non d'un autre récepteur GPS.

## Revendications

1. Véhicule porteur avec, dans son environnement, au moins deux équipements (1, 21), destinés à se transmettre des données, **caractérisé par le fait que** chaque équipement (1, 21) comporte un émetteur-récepteur radio (6, 13), la transmission des données entre les émetteurs-récepteurs radio (6, 13) desdits équipements (1, 21) s'effectuant à travers la structure du véhicule porteur par au moins deux câbles électriques réservés à d'autres usages et présentant un couplage mutuel, chaque émetteur-récepteur radio (6, 13) étant respectivement relié à un câble parmi lesdits au moins deux câbles électriques.

2. Véhicule porteur selon la revendication 1, dans lequel la transmission radio s'effectue par l'antenne d'un récepteur GPS.

3. Véhicule porteur selon la revendication 1, dans lequel la transmission s'effectue le long de la structure (31, 32) du véhicule porteur.

4. Véhicule porteur selon la revendication 3, dans lequel le véhicule porteur comporte un conducteur électrique (31) à travers lequel s'effectue la transmission entre les deux équipements.

5. Véhicule porteur selon la revendication 4, dans lequel le conducteur est un câble d'alimentation (31).

6. Véhicule porteur selon l'une des revendications 1 à 5, dans lequel les équipements comportent des émetteurs/récepteurs (6, 13) à porteuses multiples.

7. Véhicule porteur selon la revendication 6, dans lequel les émetteurs/récepteurs (12, 13, 6-8) sont agencés pour échanger un message prédéterminé de synchronisation en réception, émis sur chaque porteuse.

8. Véhicule porteur selon l'une des revendications 1 à 7, dans lequel les équipements comprennent des centrales inertielles (4).

9. Véhicule porteur selon la revendication 8, dans lequel l'un des équipements comporte une centrale inertielle et un récepteur GPS (4).

10. Véhicule porteur selon l'une des revendications 1 à 9, dans lequel l'émetteur (13) est agencé pour respecter un gabarit amplitude/fréquence maximal.

## Claims

1. Carrier vehicle having, in the environment thereof, at least two items of equipment (1, 21) which are intended to transmit data, **characterised in that** each item of equipment (1, 21) comprises a radio transmitter-receiver (6, 13), the transmission of data between the radio transmitters-receivers (6, 13) of said items of equipment (1, 21) being effected through the structure of the carrier vehicle by means of at least two electrical cables which are reserved for other uses and have a mutual coupling, each radio transmitter-receiver (6, 13) being respectively connected to a cable of said at least two electrical cables.

2. Carrier vehicle according to claim 1, in which the radio transmission is effected by the antenna of a GPS receiver.

3. Carrier vehicle according to claim 1, in which the transmission is effected along the structure (31, 32) of the carrier vehicle.

4. Carrier vehicle according to claim 3, in which the carrier vehicle comprises an electrical conductor (31) through which the transmission between the two items of equipment is effected.

5. Carrier vehicle according to claim 4, in which the conductor is a supply cable (31).

6. Carrier vehicle according to one of the claims 1 to 5, in which the items of equipment comprise multicarrier transmitters/receivers (6, 13).

7. Carrier vehicle according to claim 6, in which the transmitters/receivers (12, 13, 6 - 8) are provided for exchanging a predetermined synchronisation message upon reception, transmitted on each carrier.

8. Carrier vehicle according to one of the claims 1 to 7, in which the items of equipment comprise inertial central units (4).

9. Carrier vehicle according to claim 8, in which the one item of equipment comprises an inertial central unit and a GPS receiver (4).

10. Carrier vehicle according to one of the claims 1 to 9, in which the transmitter (13) is provided for complying with a maximum amplitude/frequency template.

## Patentansprüche

1. Trägerfahrzeug, das in seiner Umgebung mindestens zwei Einrichtungen (1, 21) aufweist, die dazu bestimmt sind, zwischen sich Daten zu übertragen, **dadurch gekennzeichnet, dass** jede Einrichtung (1, 21) einen Funk-Sender/Empfänger (6, 13) umfasst, wobei die Übertragung der Daten zwischen den Funk-Sendern/Empfängern (6, 13) dieser Einrichtungen (1, 21) durch die Struktur des Trägerfahrzeugs hindurch über mindestens zwei elektrische Kabel stattfindet, die anderen Verwendungszwecken vorbehalten sind und eine gegenseitige Kopplung aufweisen, wobei jeder Funk-Sender/Empfänger (6, 13) jeweils mit einem Kabel von diesen mindestens zwei elektrischen Kabeln verbunden ist.

2. Trägerfahrzeug nach Anspruch 1, bei dem die Funkübertragung über die Antenne eines GPS-Empfängers stattfindet.

3. Trägerfahrzeug nach Anspruch 1, bei dem die Übertragung längs der Struktur (31, 32) des Trägerfahrzeugs stattfindet.

4. Trägerfahrzeug nach Anspruch 3, bei dem das Trägerfahrzeug einen elektrischen Leiter (31) umfasst, durch den die Übertragung zwischen den beiden Einrichtungen stattfindet.

5. Trägerfahrzeug nach Anspruch 4, bei dem der Leiter ein Versorgungskabel (31) ist.

6. Trägerfahrzeug nach einem der Ansprüche 1 bis 5, bei dem die Einrichtungen Mehrband-Sender/Empfänger (6, 13) umfassen.

7. Trägerfahrzeug nach Anspruch 6, bei dem die Sender/Empfänger (12, 13, 6-8) ausgebildet sind, um eine auf jeder Trägerfrequenz gesendete vorbestimmte Empfangs-Synchronisationsnachricht auszutauschen.

8. Trägerfahrzeug nach einem der Ansprüche 1 bis 7, bei dem die Einrichtungen Trägheitsplattformen (4) umfassen.

9. Trägerfahrzeug nach Anspruch 8, bei dem eine der Einrichtungen eine Trägheitsplattform und einen GPS-Empfänger (4) umfasst.

10. Trägerfahrzeug nach einem der Ansprüche 1 bis 9, bei dem der Sender (13) ausgebildet ist, um einen maximalen Amplitude/Frequenz-Rahmen einzuhalten.
